# EUROPÄISCHE PATENTSCHRIFT

(11) **EP 3 455 921 B1**
(45) Veröffentlichungstag und Bekanntmachung des Hinweises auf die Patenterteilung: **27.05.2020**
(21) Anmeldenummer: 17721359.2
(22) Anmeldetag: 02.05.2017
(51) Int. Cl.: H02K 1/16, H02K 3/02, H02K 15/00

(54) **SYNCHRONGENERATOR EINER GETRIEBELOSEN WINDENERGIEANLAGE SOWIE VERFAHREN ZUM HERSTELLEN EINES SYNCHRONGENERATORS**
SYNCHRONOUS GENERATOR OF A GEARLESS WIND TURBINE AND METHOD FOR PRODUCING A SYNCHRONOUS GENERATOR
GÉNÉRATEUR SYNCHRONE D'UNE ÉOLIENNE À ENTRAÎNEMENT DIRECT ET PROCÉDÉ DE FABRICATION D'UN GENÉRATEUR SYNCHRONE

(30) Priorität: 11.05.2016 DE 102016108712
(43) Veröffentlichungstag der Anmeldung: 20.03.2019
(73) Patentinhaber: Wobben Properties GmbH, 26607 Aurich (DE)
(72) Erfinder: ZIEMS, Jan Carsten, 26607 Aurich (DE); RÖER, Jochen, 27777 Ganderkesee (DE)
(74) Vertreter: Eisenführ Speiser
(86) Internationale Anmeldenummer: PCT/EP2017/060352
(87) Internationale Veröffentlichungsnummer: WO 2017/194344

(56) Entgegenhaltungen:
- WO-A2-2011/006693
- GB-A- 2 493 827
- US-A1- 2012 175 994

## Beschreibung

Die vorliegende Erfindung betrifft einen Synchrongenerator, insbesondere einen vielpoligen Synchron-Ringgenerator einer getriebelosen Windenergieanlage. Außerdem betrifft die vorliegende Erfindung ein Verfahren zum Herstellen eines derartigen Synchrongenerators.

Windenergieanlagen sind allgemein bekannt und sie erzeugen elektrischen Strom aus Wind mittels eines Generators. Moderne getriebelose Windenergieanlagen weisen häufig einen vielpoligen Synchron-Ringgenerator mit großem Luftspaltdurchmesser auf. Der Durchmesser des Luftspalts beträgt hierbei wenigstens 4 m und reicht üblicherweise bis fast 5 m. Zusammengesetzte Synchrongeneratoren können sogar einen Luftspaltdurchmesser von etwa 10 m aufweisen.

Im Betrieb der Windenergieanlage, also des betreffenden Synchrongenerators, entstehen Geräusche durch Vibrationen, die durch die große Bauform auch auf große Resonanzkörper, wie beispielsweise die Gondelverkleidung einer Windenergieanlage übertragen werden und somit diese Geräusche noch verstärkt werden. Funktionsbedingt sind solche Synchrongeneratoren einer getriebelosen Windenergieanlage sehr langsam drehende Generatoren, die sich mit einer typischen Drehzahl von etwa 5 bis 35 U/min drehen. Auch diese langsame Drehzahl kann dazu beitragen, dass spezielle Geräusche, insbesondere im Vergleich zu Generatoren, die sich mit hohen Umdrehungen, wie beispielsweise 1.500 oder 3.000 U/min drehen, begünstigt werden.

Solche Synchrongeneratoren getriebeloser Windenergieanlagen und damit auch die Windenergieanlagen selbst können aufgrund ihres Dauerbetriebs zu einer dauerhaften störenden Geräuschquelle werden. Heutzutage werden besonders große, moderne Windenergieanlagen zunehmend in größerem Abstand von Siedlungen aufgestellt und dort betrieben, sodass auch etwaige Geräusche der Windenergieanlage weniger störend wahrgenommen werden.

Um diese Geräuschentwicklung zu reduzieren, sind daher Synchrongeneratoren mit einem Rotor und einem Stator bekannt, wobei der Stator einen speziellen Aufbau hat, um der Geräuschentwicklung entgegenzuwirken. Es ist beispielsweise bekannt, die Nuten und Zähne, mit denen eine Wicklung des Stators, nämlich die Statorwicklung, aufgenommen wird, nicht gleichmäßig, sondern ungleichmäßig in Umfangsrichtung des Stators zu positionieren.

Hierdurch wird erreicht, dass in Umfangsrichtung gleichmäßig verteilte Rotor- bzw. Läuferpole bei der Drehbewegung des Rotors die entsprechenden Zähne bzw. Nuten, die zueinander versetzt oder verschränkt sind, nicht jeweils exakt gleichzeitig erreichen. Hierdurch werden Vibrationen reduziert, wodurch auch die Geräuschentwicklung derartiger Generatoren und damit auch der gesamten Windenergieanlage selbst reduziert werden.

Die US 2012/0175994 A1 offenbart einen Generator für eine Windenergieanlage, bei dem die Nuten für die Statorwicklungen eine ungleichmäßige Verteilung aufweisen.

Die Wicklung des Stators eines derartigen Generators wird üblicherweise mit einem isolierten Endlosrunddraht, der z. B. aus Kupfer hergestellt ist, erzeugt. Hierzu wird der Draht eines Strangs in eine Vielzahl von Nuten mit jeweils mehreren Windungen eingewickelt, sodass ein Strang aus einem durchgängigen Stück des Drahts hergestellt wird. Dieses Wickeln des Stators ist sehr aufwändig und muss sinnvollerweise von Hand erfolgen, um - insbesondere in den Biegestellen - die Unversehrtheit der Drähte sowie auch der Isolierung des Drahts schon während des Wickelns zu überwachen.

Der Erfindung liegt somit die Aufgabe zugrunde, wenigstens eines der vorgenannten Probleme anzugehen. Insbesondere soll eine Lösung vorgeschlagen werden, die weniger aufwändig ist als die Methode des Wickelns des Stators mit durchgehenden Strängen von Hand. Zumindest soll zu bisher bekannten Lösungen eine alternative Lösung vorgeschlagen werden.

Das Deutsche Patent- und Markenamt hat in der Prioritätsanmeldung zu vorliegender Anmeldung den folgenden Stand der Technik recherchiert: WO 2012/097107 A1 und EP 2 454 802 B1.

Erfindungsgemäß wird ein Synchrongenerator einer getriebelosen Windenergieanlage gemäß dem unabhängigen Anspruch 1 vorgeschlagen. Der Synchrongenerator ist insbesondere ein vielpoliger Synchron-Ringgenerator einer getriebelosen Windenergieanlage. Ein solcher vielpoliger Synchron-Ringgenerator einer getriebelosen Windenergieanlage weist eine Vielzahl von Statorpolen, insbesondere wenigstens 48 Statorzähne, häufig sogar deutlich mehr Statorzähne, wie insbesondere 96 Statorzähne, auf. Der magnetisch aktive Bereich des Generators, nämlich sowohl des Rotors, der auch als Läufer bezeichnet werden kann, als auch des Stators ist in einem ringförmigen Bereich um die Drehachse des Synchrongenerators angeordnet. So ist insbesondere ein Bereich von 0 bis wenigstens 50 % des Radius des Luftspalts frei von Materialien, die elektrischen Strom oder ein elektrisches Feld des Synchrongenerators führen. Insbesondere ist dieser Innenraum vollständig frei und grundsätzlich auch begehbar. Häufig beträgt dieser Bereich auch mehr als 0 bis 50 % des Luftspaltradius, insbesondere bis zu 0 bis 70 % oder sogar 0 bis 80 % des Luftspaltradius. Je nach Aufbau kann eine Tragstruktur in diesem inneren Bereich vorhanden sein, die aber in einigen Ausführungen axial versetzt ausgebildet sein kann.

Der Synchrongenerator umfasst demnach einen Rotor und einen Stator, wobei der Stator einen Statorring mit Zähnen und dazwischen angeordneten Nuten zum Aufnehmen einer Statorwicklung aufweist. Der Statorring ist erfindungsgemäß in Umfangsrichtung in Statorsegmente eingeteilt. Jedes Statorsegment weist die gleiche Anzahl von Nuten auf, wobei die Nuten innerhalb eines Segments einen im Wesentlichen gleichen Abstand in Umfangsrichtung zueinander haben.

In einem Verbindungsbereich zweier Segmente, der insbesondere dem Bereich entspricht, an dem zwei Segmente in Umfangsrichtung nebeneinander angeordnet sind, nebeneinander liegen oder sich berühren, ist der Abstand zweier benachbarter Nuten, die jeweils einem von zwei unterschiedlichen Segmenten, nämlich den Segmenten, die in diesem Verbindungsbereich nebeneinander liegen, zugeordnet sind, unterschiedlich von dem Abstand, den die Nuten innerhalb eines Segments zueinander haben. Die zwei Nuten zweier unterschiedlicher Segmente, die benachbart liegen, weisen also einen Abstand auf, der größer oder kleiner als der Abstand der Nuten innerhalb eines Segments ist. Außerdem ist die Statorwicklung mit Formspulen gebildet. Formspulen bestehen hierbei insbesondere aus einem elektrischen Leiter, der in mehreren Windungen in eine vorbestimmte Form gebracht wurde und zwei Anschlüsse aufweist, mit denen die Formspule mit weiteren Formspulen verbunden werden kann, um einen Strang durch mehrere in Reihe geschaltete Spulen des Generators zu bilden.

Bislang galt, dass aufgrund der unterschiedlich beabstandeten Nuten Formspulen nicht wirtschaftlich für einen derartigen Stator sind, da diese nur dann wirtschaftlich sind, wenn diese innerhalb eines Stators alle die gleiche Form aufweisen. Bei Synchrongeneratoren mit unterschiedlichem Nutenabstand ist dieser Vorteil jedoch zunächst augenscheinlich nicht gegeben, da verschieden große Formspulen gewählt werden müssen, um in den unterschiedlich weit beabstandeten Nuten angeordnet werden zu können und gleichzeitig mit Leistungsverlusten zu rechnen ist.

Es wurde jedoch erkannt, dass im Falle, dass der Stator in mehrere Segmente eingeteilt wird, die jeweils die gleiche Anzahl von Nuten aufweisen, innerhalb eines Segments immer eine bestimmte Anzahl von Formspulen, insbesondere Einschicht-Formspulen, vorgesehen werden kann und somit Formspulen mit der gleichen Form trotz unterschiedlicher Nutenabstände verwendet werden können. Hierbei werden demnach die Formspulen der Segmente miteinander verbunden anstatt Formspulen vorzusehen, die auch segmentübergreifend in Nuten eingelegt werden.

Somit ist ein vergleichsweise günstiger Synchrongenerator mit asymmetrisch verteilten Nuten realisierbar, ohne eine teure Handwicklung mit Endlosdrähten zu verwenden.

Gemäß einer Ausführungsform weisen die Formspulen jeweils zwei Schenkel auf, wobei die Schenkel durch zwei Wicklungsköpfe, die auch Wickelköpfe genannt werden, miteinander verbunden und die Anschlüsse vorzugsweise im Bereich eines der Wicklungsköpfe angeordnet sind. Abgesehen von dem Bereich der Anschlüsse weisen die Schenkel und Wicklungsköpfe aller Formspulen der Statorwicklung die gleiche Form auf. Hierdurch wird gewährleistet, dass die Formspulen bei der Produktion alle auf einer im Wesentlichen identischen Vorrichtung vorgeformt werden können und somit eine hohe Stückzahl von Formspulen produziert werden kann, wodurch sich die Herstellungskosten weiter reduzieren.

Gemäß einer weiteren Ausführungsform sind die Schenkel jeder Formspule im Stator in einem gleichen Radialbereich des Stators angeordnet. Ein Radialbereich entspricht hier einem Bereich zwischen zwei um die Statorachse verlaufenden Kreisen mit unterschiedlichen Radien. Demnach weisen also vorteilhafterweise alle Schenkel aller Formspulen im Stator den gleichen Abstand zu einem Mittelpunkt des Stators auf. Diese Anordnung der Formspulen entspricht einer einschichtigen Anordnung, wobei in jeder Nut nur ein einzelner Schenkel einer Formspule angeordnet ist. Durch diese einschichtige Anordnung der Formspulen in den Nuten wird weiterhin gewährleistet, dass Schenkel derselben Formspule in den Verbindungsbereichen zweier Segmente nicht in Nuten benachbarter Segmente eingelegt werden müssen - wie es bei sonst häufig verwendeten zweischichtigen Wicklungen der Fall ist. Bei einer zweischichtigen Anordnung der Formspulen müssten beispielsweise nämlich auch Formspulen segmentübergreifend angeordnet werden. Hierbei wären wieder Formspulen mit unterschiedlichen Formen nötig, nämlich solche, die innerhalb eines Segments liegen und solche, die eine Form aufweisen, um segmentübergreifende Nuten miteinander zu verbinden.

Gemäß einer weiteren Ausführungsform weist jedes Segment jeweils sechs, oder eine Vielzahl von sechs, Formspulen auf. Ferner sind gemäß dieser Ausführungsform sechs der Anschlüsse der Formspulen eines Segments mit sechs Anschlüssen der Formspulen eines in Umfangrichtung davor liegenden Segments und sechs Anschlüsse der Formspulen eines in Umfangrichtung dahinter liegenden Segments verbunden. Hierdurch ergeben sich sechs Stränge des Stators, sodass der Generator als sechsphasiger Generator betrieben werden kann. Hierdurch werden weiterhin Vibrationen vermindert, da die Drehmomentwelligkeit aufgrund von sechs Phasen anstatt der sonst üblichen drei Phasen reduziert wird.

Gemäß einer weiteren Ausführungsform ist die Verbindung jeweils zweier der Anschlüsse mit einem Verbindungselement hergestellt, das eine U-Form aufweist. Die Enden der U-Form sind hierbei jeweils mit einem Anschluss unterschiedlicher Formspulen verbunden. U-förmige Verbindungselemente sind besonders vorteilhaft, da diese in Umlaufrichtung nacheinander in zueinander um 180 Grad gedrehter Anordnung angeordnet werden können und somit ein oder mehrere Enden der U-Form in den Mittelraum zwischen zwei Enden der U-Form eines anderen Verbindungselements eingreifen können, sodass ein platzsparender Aufbau möglich ist.

Erfindungsgemäß werden für den Stator Formspulen mit unterschiedlichen Materialien verwendet. Hierbei werden Formspulen mit einem ersten spezifischen Widerstand zumindest in die Nuten eingelegt, deren Abstand geringer als der Abstand der Nuten innerhalb eines Segments zueinander ist. In der Mehrzahl der übrigen Nuten wird jedoch eine Formspule mit einem vergleichsweise höheren spezifischen Widerstand als dem ersten Widerstand eingesetzt.

Im Betrieb hängt die Wärmeentwicklung in den Schenkeln der Formspulen direkt mit dem spezifischen Widerstand des Materials, aus dem die Formspulen hergestellt sind, zusammen. Das heißt, dass mit zunehmendem spezifischen Widerstand auch die Wärmeentwicklung beim Durchfluss eines Stroms durch die Formspule zunimmt.

Gerade im Bereich der Nuten, in denen zwei Schenkel von Formspulen sehr dicht nebeneinander liegen, ist es daher notwendig, eine vergleichsweise geringere Wärmeentwicklung als in den übrigen Nuten zu erhalten, um die Gesamtwärmeentwicklung im Stator unterhalb bestimmter Grenzwerte zu halten. Daher wirkt es sich besonders vorteilhaft aus, zumindest in die Nuten, die einen geringen Abstand zueinander haben, Formspulen mit einem vergleichsweise geringeren spezifischen Widerstand einzusetzen, als in Nuten, die einen größeren Abstand zueinander haben.

Gemäß einer weiteren vorteilhaften Ausführungsform werden in die Nuten, deren Abstand geringer als der Abstand der Nuten innerhalb eines Segments ist, Schenkel einer mit oder aus Kupfer hergestellten Formspule und in die Mehrzahl der übrigen Nuten jeweils ein Schenkel einer mit oder aus Aluminium hergestellten Formspule eingesetzt. Aluminium ist in sehr großen Mengen kostengünstig beschaffbar und gleichzeitig einfach verarbeitbar. Daher ist es besonders vorteilhaft, in die Mehrzahl der Nuten Formspulen aus Aluminium einzusetzen. Auch Kupfer ist in ausreichender Menge beschaffbar. Zwar weist Kupfer einen höheren Beschaffungspreis als Aluminium auf, wobei Kupfer jedoch einen geringeren spezifischen Widerstand aufweist und daher der Einsatz von Kupfer zumindest in sehr dicht nebeneinander liegenden Nuten vorteilhaft ist, da das Temperaturverhalten und der damit verbundene Vorteil bei der Wärmeentwicklung eines Stators den vergleichsweise höheren Anschaffungspreis ausgleicht.

Gemäß einer weiteren Ausführungsform ist mindestens ein Anschluss einer Formspule mit oder aus Aluminium mit mindestens einem Anschluss einer Formspule mit oder aus Kupfer verbunden. Die Verbindung ist mit einem Verbindungselement, das gemäß obersten Alternative aus einer Kupfer-Aluminium-Legierung hergestellt ist, gefertigt. Eine derartige Legierung aus Kupfer und Aluminium dient, dazu eine sichere Verbindung zwischen den Anschlüssen der Formspulen aus unterschiedlichen Materialien herzustellen.

Gemäß einer weiteren Alternative ist das Verbindungselement ein aus den beiden Leitermaterialien zusammengefügtes Verbindungselement. So besteht das Verbindungselement beispielsweise auf der einen Seite aus Kupfer und auf der anderen Seite aus Aluminium, wobei die beiden Materialien miteinander verbunden wurden, beispielsweise durch Kaltpressschweißen, Rührreibschweißen oder Presslöten bzw. Pressschweißen.

Gemäß der weiteren Ausführungsordnung sind die Kupfer- und Aluminiumspulen, also zwei unterschiedliche Formspulen, durch ein Verbindungselement miteinander verbunden, das aus Aluminium besteht und bei der Fertigung der Kupferspule vor dem Bestücken des Stators bereits durch Kaltpressschweißen, Rührreibschweißen, Presslöten oder Pressschweißen mit der Kupferspule verbunden wurde.

Gemäß einer weiteren Ausführungsform ist der Statorring des Stators mindestens an zwei Stellen jeweils insbesondere im Verbindungsbereich zweier Segmente, insbesondere zwischen zwei benachbarten Nuten, die jeweils einem von zwei unterschiedlichen Segmenten zugeordnet sind und deren Abstand größer als der Abstand der Nuten innerhalb eines Segments ist, aus mehreren Statorringteilen miteinander verbunden.

Demnach ist also der Statorring aus mehreren Statorringteilen hergestellt. Diese werden beispielsweise vorgefertigt, wobei während der Vorfertigung auch bereits die Formspulen in die Nuten der Statorringteile eingesetzt werden können. Erst am Einsatzort werden dann die einzelnen Statorringteile miteinander verbunden. Vorteilhafterweise ist der Statorring genau dort geteilt, wo zwei Segmente aneinanderstoßen, deren äußere Nuten einen größeren Abstand im zusammengesetzten Zustand zueinander haben als die übrigen Nuten eines Segments. Diese Stellen zur Trennung des Statorrings sind besonders vorteilhaft, da durch den großen Nutenabstand keine besonders schmalen Zähne des Stators auftreten, die beispielsweise beim Transport beschädigt werden könnten. Eine robuste Bauweise des Stators ist also gewährleistet. Die Teilbarkeit ermöglicht gleichzeitig den Transport von besonders großen Statoren.

Gemäß einer weiteren Ausführungsform umfassen die Formspulen jeweils im Bereich ihres Wickelkopfs eine der folgenden Formen. Gemäß einer ersten Form der Formspulen dieser Ausführungsform sind die Schenkel außerhalb des Statorrings in entgegengesetzter Richtung gekröpft und verlaufen parallel bis zu einer 180-Grad-Biegung, die die Schenkel verbindet. Alternativ sind die Schenkel in unterschiedlichen Abständen außerhalb des Statorrings in der gleichen Richtung gebogen und verlaufen dann parallel bis zu einer 180-Grad-Biegung, die die Schenkel verbindet. Hierbei weist die Biegung der beiden Schenkel in die gleiche Richtung und beträgt einen Winkel im Bereich von 0 bis 90 Grad. Gemäß einer weiteren alternativen Ausführungsform ist die Biegung in die gleiche Richtung mit einem Winkel von 90 Grad vorgesehen. Derartig geformte Spulen führen in vorteilhafter Weise zu Einschichtformspulen, die also im gleichen Radialbereich des Stators anordenbar sind.

Außerdem betrifft die Erfindung ein Verfahren zum Herstellen eines Synchrongenerators nach einen der vorgenannten Ausführungsformen, sowie im unabhängigen Anspruch 11 beschrieben. Gemäß dem Verfahren werden in jedes Segment jeweils sechs, oder ein Vielfaches von sechs, Formspulen eingesetzt. Außerdem werden sechs der Anschlüsse der Formspulen eines Segments mit sechs Anschlüssen der Formspulen eines in Umfangrichtung davor liegenden Segments und sechs Anschlüsse der Formspulen eines in Umfangrichtung dahinter liegenden Segments verbunden. Hierdurch ergeben sich vorteilhafterweise sechs Stränge jeweils durchgehender elektrischer Leitungen oder Stränge durch den Stator eines Synchrongenerators. Hierfür können Formspulen verwendet werden, die eine verhältnismäßig günstigere Herstellung eines Synchrongenerators im Vergleich zu einem von Hand gewickelten Synchrongenerator ermöglichen, wobei gleichzeitig unterschiedliche Nutenabstände möglich sind, um die Geräuschentwicklung des Generators im Betrieb zu reduzieren.

Gemäß einer Ausführungsform des Verfahrens werden die Formspulen vor dem Einsetzen in die Nuten gewickelt, indem ein oder mehrere parallel angeordnete Drähte, insbesondere Flachdrähte, um einen Wickelkern, der vorzugsweise aus zwei Dornen gebildet ist, gewickelt werden. Die sich daraus ergebende Spule wird derart gespreizt, bis sich der gewünschte Abstand der beiden Schenkel entsprechend dem Abstand der Nuten innerhalb eines Segments ergibt. Daraufhin werden die Wickelköpfe gebogen, indem Abschnitte der Spule in Vorrichtungen fixiert und diese Vorrichtungen dann derart gegeneinander bewegt werden, bis sich die gewünschte Form der Formspule durch plastische Deformation ergibt. Ein einfaches Vorfertigen hoher Stückzahlen der Formspulen mit gleicher Form ist somit möglich.

Gemäß einer weiteren Ausführungsform des Verfahrens wird im Falle gekröpfter Formspulen die Spule im Bereich des Wicklungskopfes zunächst in entgegengesetzter Richtung gekröpft, bevor die Schenkel gespreizt werden. Hierdurch wird gewährleistet, dass der Abstand der Schenkel der Spule beim Kröpfen nicht versehentlich geändert wird.

Gemäß einer weiteren Ausführungsform des Verfahrens werden unterschiedliche Formspulen mit U-förmigen Verbindungsteilen durch Kaltschweißen, Presslöten oder Rührreibschweißen verbunden. Hierdurch kann auf Kontaktringe, mit denen üblicherweise Formspulen verbunden werden, verzichtet werden. Ein platzsparender Aufbau, insbesondere im Hinblick auf die Tiefe des Stators, ist somit möglich.

Weitere Ausführungsformen ergeben sich anhand der in den Figuren näher beschriebenen Ausführungsbeispiele.
- Fig. 1: zeigt eine Windenergieanlage,
- Fig. 2: eine schematische Seitenansicht eines als Ringgenerator ausgebildeten Synchrongenerators,
- Fig. 3: zeigt eine Formspule eines Ausführungsbeispiels des erfindungsgemäßen Synchrongenerators,
- Fig. 4: eine Vergrößerung des Wickelkopfs der Spule aus Fig. 3,
- Fig. 5: einen im Vergleich zum Ausführungsbeispiel in den Fig. 3 und 4 andersartig gewickelter Wickelkopf,
- Fig. 6: eine weitere Ausführungsform der Form einer Formspule,
- Fig. 7: drei Segmente eines exemplarisch dargestellten Statorrings in der Seitenansicht und
- Fig. 8: eine exemplarische Ansicht von drei Segmenten eines Stators in Ansicht von außen auf den Stator.

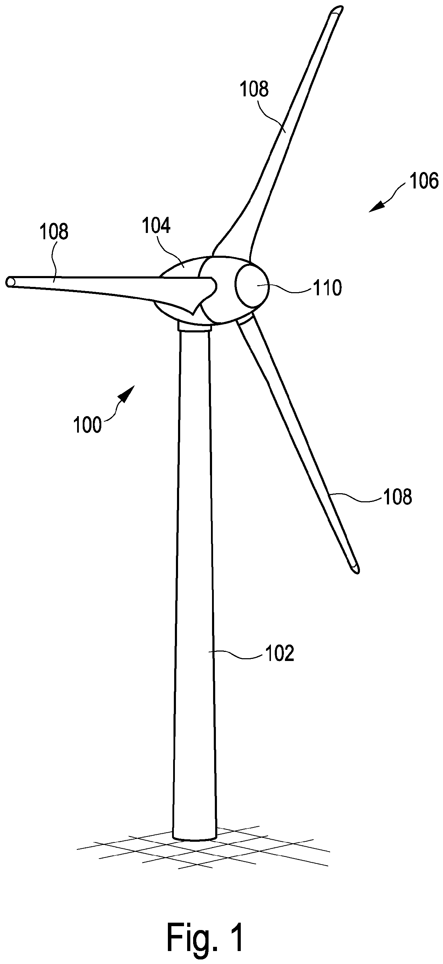

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

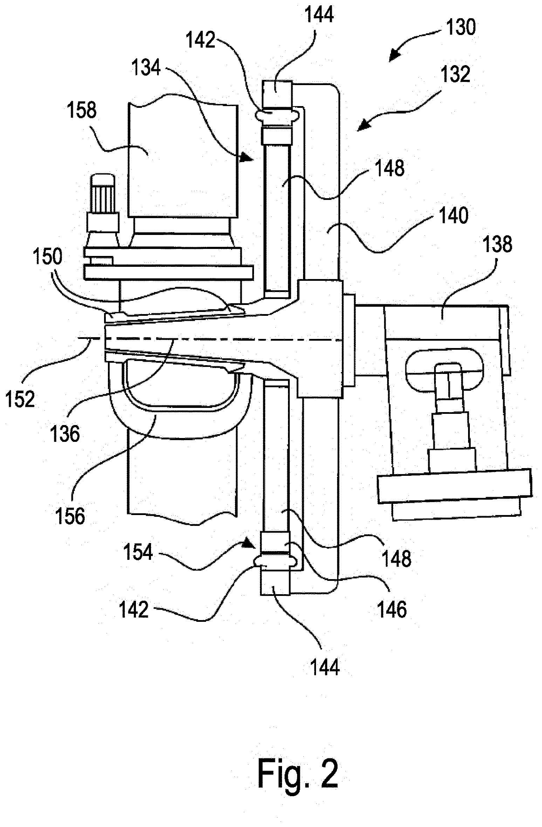

Fig. 2 zeigt einen Generator 130 schematisch in einer Seitenansicht. Er weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 30 an dem Statorträger 140 befestigt sind.

Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige Millimeter dick ist, insbesondere weniger als 6 mm, aber einen Durchmesser von mehreren Metern aufweist, insbesondere mehr als 4 m.

Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

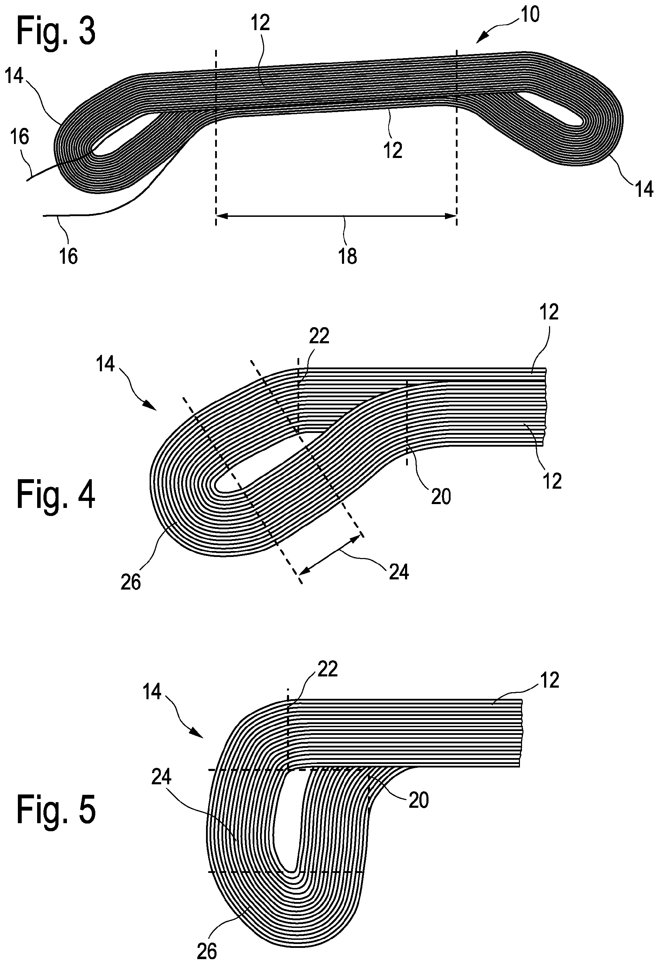

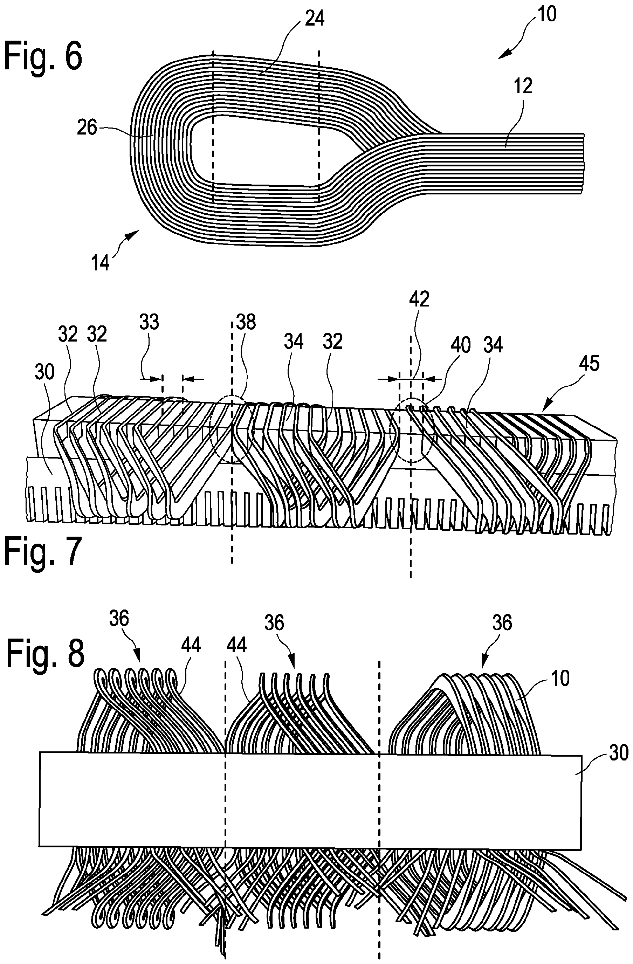

Fig. 3 zeigt ein erstes Ausführungsbeispiel einer Formspule 10 für den erfindungsgemäßen Synchrongenerator 130. Die Formspule 10 weist zwei Schenkel 12 auf. Außerdem weist die Spule 10 zwei Wickelköpfe 14 auf. Im Bereich 18 des auf der linken Seite dargestellten Wickelkopfs 14 sind zwei Anschlüsse 16 dargestellt. Der Bereich 18 der Formspule 10, nämlich die beiden Schenkel 12 in diesem Bereich 18, werden später in die Nuten 32 ein- und desselben Segments eines Stators 132 eines Synchrongenerators 130 eingelegt. Die soeben genannten Segmente werden unten zur Beschreibung der Fig. 7 und 8 beschrieben. Die Wickelköpfe 14 entsprechen Biegungen der Schenkel 12, um die beiden Schenkel 12 miteinander zu verbinden.

Fig. 4 zeigt eine vergrößerte Darstellung eines der Wickelköpfe 14 der Formspule 10 aus Fig. 3. Dieser Wickelkopf 14 entspricht dem in Fig. 3 auf der rechten Seite dargestellten Wickelkopf, wobei hier die Rückansicht gegenüber Fig. 3 dargestellt ist. Der Wickelkopf 14 umfasst, dass die Schenkel 12 in unterschiedlichen Abständen, nämlich nach dem Abstand 20 einerseits sowie dem Abstand 22 andererseits, in die gleiche Richtung gebogen sind. In einem Bereich 24 verlaufen die beiden gebogenen Schenkel 12 wieder parallel und werden durch eine 180-Grad-Biegung 26 miteinander verbunden. Die Biegung der Schenkel 12 in die gleiche Richtung beträgt hier etwa 40 Grad.

Eine alternative Ausführungsform der Formspule 10 ist in Fig. 5 dargestellt, in der der Wickelkopf 14 nach den Abständen 20, 22 um 90 Grad gebogen ist. Durch diese dargestellten Formspulen 10 lassen sich beliebig viele dieser so geformten Spulen 10 in die Nuten 32 eines Stators 132 nebeneinander einsetzen, ohne dass sich die einzelnen Wicklungen berühren und trotzdem die Schenkel 12 im gleichen radialen Abstand bzw. gleichen Radialbereich zum Zentrum eines Stators 132 angeordnet sind.

Fig. 6 zeigt noch ein weiteres Ausführungsbeispiel eines Wickelkopf 14 einer Formspule 10, bei dem die Schenkel 12 in entgegengesetzter Richtung im gleichen Abstand gekröpft, also zunächst in entgegengesetzter Richtung um 90 Grad und dann erneut um 90 Grad in die gleiche Richtung gebogen sind. Ebenfalls ist dadurch ein Bereich 24 erzeugt worden, in dem die beiden gekröpften Bereiche der Schenkel 12 im Wesentlichen parallel verlaufen. Wiederum ist eine 180-Grad-Biegung 26 vorgesehen, die die beiden Schenkel 12 verbindet.

Fig. 7 zeigt exemplarisch einen Ausschnitt eines Statorrings 30, der zur besseren Ansicht ungekrümmt dargestellt ist. Der Statorring 30 weist Nuten 32 und Zähne 34 auf. Hier sind drei Segmente 36 dargestellt. In die Nuten 32 der Segmente 36 sind Formspulen 10 eingelegt. Jedes der Segmente 36 weist sechs Formspulen 10 auf. Die Schenkel 12 der Formspulen 10 und die Nuten 32 innerhalb eines Segments 36 weisen jeweils den gleichen Abstand 33 zueinander auf. Im Verbindungsbereich 38 und im Verbindungsbereich 40 weisen die Nuten 32 jedoch einen Abstand 42 auf, der vom Abstand 33 der Nuten 32 innerhalb eines Segments 36 unterschiedlich ist. Im Verbindungsbereich 38 beispielsweise ist der Abstand der beiden Nuten 32 gleich Null und somit geringer als der Abstand 33 der Nuten 32 innerhalb eines Segments 36. Im Verbindungsbereich 40 hingegen ist der Abstand 42 der Nuten 32 etwa doppelt so breit wie der Abstand 33 der Nuten 32 innerhalb eines Segments. Die Oberseite 45 des Statorrings 30 entspricht in der Darstellung der radial innenliegenden Seite des Stators 132.

Fig. 8 zeigt eine Ansicht radial von außen auf den Stator 132 gesehen. Auch hier ist exemplarisch nur der Bereich mit drei Segmenten 36 dargestellt. Gemäß dem in Fig. 8 dargestellen Ausführungsbeispiel sind die beiden Formspulen 44 aus Kupfer hergestellt.

Die übrigen Formspulen 10 sind aus Aluminium hergestellt. Durch die Kupferformspulen 44, deren Schenkel 12 im Verbindungsbereich 38, 40 der zwei Segmente 36 sehr nahe beieinander liegen, entsteht eine vergleichsweise geringere Wärmeentwicklung im Betrieb als für den Fall, dass diese beiden Spulen aus Aluminium gefertigt wären, da Kupfer einen geringeren spezifischen Widerstand als Aluminium aufweist. Dank der Verwendung von Aluminiumformspulen sowie Kupferformspulen ist ein vergleichsweise günstiger Stator 132 bzw. Synchrongenerator 130 herstellbar, der vorteilhafte Eigenschaften im Hinblick auf die Wärmeverteilung aufweist.

## Patentansprüche

1. Synchrongenerator einer getriebelosen Windenergieanlage (100), umfassend einen Rotor (106) und einen Stator (132), wobei der Stator (132) einen Statorring (30) mit Zähnen (34) und dazwischen angeordneten Nuten (32) zum Aufnehmen einer Statorwicklung aufweist, und der Statorring (30) in Umfangsrichtung in Statorsegmente (36) mit jeweils einer gleichen Anzahl von Nuten (32) eingeteilt ist und innerhalb eines Segments (36) die Nuten (32) einen im Wesentlichen gleichen Abstand (33) in Umfangsrichtung zueinander haben, wobei sich in mindestens einem Verbindungsbereich (38, 40) zweier Segmente (36) der Abstand (42) mindestens zweier benachbarter Nuten (32), die jeweils einem von zwei unterschiedlichen Segmenten (36) zugeordnet sind, von dem Abstand (33) der Nuten (32) innerhalb eines Segments (36) unterscheidet,
**dadurch gekennzeichnet, dass**
die Statorwicklung mit Formspulen (10) gebildet ist, wobei
die Formspulen (10) aus unterschiedlichen Materialien hergestellt sind, wobei in benachbarten Nuten (32), deren Abstand (42) geringer als der Abstand (33) der Nuten (32) innerhalb eines Segments (36) zueinander ist, ein Schenkel (12) einer Formspule (10) mit einem ersten spezifischen Widerstand und in der Mehrzahl der übrigen Nuten (32) jeweils ein Schenkel (12) einer Formspule (10) mit einem vergleichsweise höheren spezifischen Widerstand eingesetzt ist.

2. Synchrongenerator nach Anspruch 1, wobei die Formspulen (10) jeweils zwei Schenkel (12) aufweisen, die Schenkel (12) durch zwei Wicklungsköpfe (14) miteinander verbunden sind und die Formspulen (10) jeweils zwei Anschlüsse (16) im Bereich (18) eines der Wicklungsköpfe (14) aufweist, wobei abgesehen von den Anschlüssen (16) die Schenkel (12) und Wicklungsköpfe (14) aller Formspulen (10) der Statorwicklung im Wesentlichen die gleiche Form aufweisen.

3. Synchrongenerator nach Anspruch 1 oder 2, wobei die Schenkel (12) jeder Formspule (10) im Stator (132) in einem gleichen Radialbereich (24) des Stators (132) angeordnet sind.

4. Synchrongenerator nach einem der vorhergehenden Ansprüche, wobei jedes Segment (36) jeweils sechs, oder ein Vielfaches von sechs, Formspulen (10) mit jeweils einem ersten Anschluss (16) und einem zweiten Anschluss (16) aufweist, wobei sechs der Anschlüsse (16) der Formspulen (10) eines Segments (36) mit sechs Anschlüssen (16) der Formspulen (10) eines in Umfangsrichtung davor liegenden Segments (36) und sechs Anschlüsse (16) der Formspulen (10) eines in Umfangsrichtung dahinter liegenden Segments (36) verbunden sind.

5. Synchrongenerator nach einem der vorhergehenden Ansprüche, wobei die Verbindung zweier der Anschlüsse (16) unterschiedlicher Formspulen (10) mit U-förmigen Verbindungselementen hergestellt ist, wobei die Enden der U-Form jeweils mit einem Anschluss (16) verbunden sind.

6. Synchrongenerator nach einem der vorhergehenden Ansprüche, wobei in die benachbarten Nuten (32), deren Abstand (42) geringer als der Abstand (33) der Nuten (32) innerhalb eines Segments (36) zueinander ist, ein Schenkel (12) einer mit oder aus Kupfer hergestellten Formspule (44) und in der Mehrzahl der übrigen Nuten (32) jeweils ein Schenkel (12) einer mit oder aus Aluminium hergestellten Formspule (10) eingesetzt ist.

7. Synchrongenerator nach einem der vorhergehenden Ansprüche, wobei die Verbindung mindestens zweier der Anschlüsse (16) unterschiedlicher Formspulen (10) jeweils durch ein Verbindungselement hergestellt ist, das aus Aluminium besteht und bei der Fertigung der Kupferspule vor dem Bestücken des Stators durch Kaltpressschweißen, Rührreibschweißen, Presslöten oder Pressschweißen mit dem Anschluss der Kupferformspule verbunden wurde, der nach dem Bestücken des Stators mit einem Anschluss einer Aluminiumformspule verbunden ist.

8. Synchrongenerator nach einem der vorhergehenden Ansprüche, wobei mindestens ein Anschluss (16) einer Formspule (10) mit oder aus Aluminium mit mindestens einem Anschluss (16) einer Formspule (44) mit oder aus Kupfer verbunden ist und die Verbindung vorzugsweise mit einem Verbindungselement, das aus einer Kupfer-Aluminium-Legierung hergestellt ist oder das aus zwei Leitermaterialien besteht, die vor dem Verbinden der Anschlüsse zu einem Teil miteinander verbunden werden, hergestellt ist.

9. Synchrongenerator nach einem der vorhergehenden Ansprüche, wobei der Statorring (30) des Stators (132) mindestens an zwei Stellen jeweils insbesondere im Verbindungsbereich (40) zweier Segmente (36), insbesondere zwischen zwei benachbarten Nuten (32), die jeweils einem von zwei unterschiedlichen Segmenten (36) zugeordnet sind und deren Abstand (42) größer als der Abstand (33) der Nuten (32) innerhalb eines Segments (36) ist, aus mehreren Statorringteilen miteinander verbunden ist.

10. Synchrongenerator nach einem der vorhergehenden Ansprüche, wobei die Formspulen (10) jeweils im Bereich des Wicklungskopfes (14) eine der folgenden Formen aufweisen:
- außerhalb des Statorrings (30) sind die Schenkel (12) in entgegengesetzter Richtung gekröpft und verlaufen parallel bis zu einer 180-Grad-Biegung (26), die die Schenkel (12) verbindet, oder
- außerhalb des Statorrings (30) sind die Schenkel (12) in unterschiedlichen Abständen (20, 22) in die gleiche Richtung gebogen und verlaufen dann parallel bis zu einer 180-Grad-Biegung (26), die die Schenkel (12) verbindet, wobei die Biegung (26) in die gleiche Richtung einen Winkel im Bereich von 0 bis 90 Grad aufweist oder
- außerhalb des Statorrings (30) sind die Schenkel (12) in unterschiedlichen Abständen (20, 22) in der gleichen Richtung gebogen und verlaufen dann parallel bis zu einer 180-Grad-Biegung (26), die die Schenkel (12) verbindet, wobei die Biegung (26) in die gleiche Richtung einen Winkel von 90 Grad aufweist.

11. Verfahren zum Herstellen eines Synchrongenerators (130) nach einem der vorhergehenden Ansprüche, wobei der Synchrongenerator (130) einen Statorring (30) aufweist, der in mehrere Segmente (36) geteilt ist, wobei in jedes Segment (36) jeweils sechs, oder ein Vielfaches von sechs, Formspulen (10) eingesetzt werden, wobei jede Formspule (10) zwei Anschlüsse (16) aufweist und sechs der Anschlüsse (16) der Formspulen (10) eines Segments (36) mit sechs Anschlüssen (16) der Formspulen (10) eines in Umfangsrichtung davor liegenden Segments (36) und sechs Anschlüsse (16) der Formspulen (10) eines in Umfangsrichtung dahinter liegenden Segments (36) verbunden werden.

12. Verfahren nach Anspruch 11, wobei die Formspulen (10) jeweils vordem Einsetzen in die Nuten (32) gewickelt werden, indem ein oder mehrere parallel angeordnete Drähte, insbesondere Flachdrähte, um einen Wickelkern, der vorzugsweise aus zwei Dornen gebildet ist, gewickelt werden und die sich daraus ergebende Spule derart gespreizt wird, bis sich der gewünschte Abstand (20, 22) der beiden Schenkel (12) entsprechend dem Abstand (33) der Nuten (32) innerhalb eines Segments (36) ergibt und die Wicklungsköpfe (14) gebogen werden, indem Abschnitte der Spule (10) in Vorrichtungen fixiert und diese Vorrichtungen dann derart gegeneinander bewegt werden, bis sich die gewünschte Form der Formspule (10) durch plastische Deformation ergibt.

13. Verfahren nach Anspruch 12, wobei im Falle gekröpfter Formspulen (10) die Spule im Bereich des Wicklungskopfes (14) zunächst in entgegengesetzter Richtung gekröpft wird, bevor die Schenkel (12) gespreizt werden.

14. Verfahren nach einem der Ansprüche 11 bis 13, wobei die Anschlüsse (16) unterschiedlichen Formspulen (10) mit U-förmigen Verbindungsteilen durch Kaltschweißen, Presslöten oder Rührreibschweißen verbunden werden.

## Claims

1. A synchronous generator of a gearless wind turbine (100), comprising a rotor (106) and a stator (132), wherein the stator (132) has a stator ring (30) having teeth (34) and slots (32) arranged therebetween for receiving a stator winding, and, in the circumferential direction, the stator ring (30) is divided into stator segments (36), each having an equal number of slots (32), and, within a segment (36), the slots (32) have a substantially equal spacing (33) with respect to one another in the circumferential direction, wherein, in at least one connecting region (38, 40) of two segments (36), the spacing (42) of at least two adjacent slots (32), which are each assigned to one of two different segments (36), differs from the spacing (33) of the slots (32) within a segment (36),
**characterized in that**
the stator winding is formed with form coils (10), wherein
the form coils (10) are produced from different materials, wherein, in adjacent slots (32), the spacing (42) of which is less than the spacing (33) of the slots (32) within a segment (36), a leg (12) of a form coil (10) with a first resistivity is used and, in the majority of the remaining slots (32), a leg (12) of a form coil (10) with a relatively higher resistivity is used in each case.

2. The synchronous generator as claimed in claim 1, wherein the form coils (10) each have two legs (12), the legs (12) are connected to one another by two winding overhangs (14), and the form coils (10) each have two terminals (16) in the region (18) of one of the winding overhangs (14), wherein, apart from the terminals (16), the legs (12) and winding overhangs (14) of all the form coils (10) of the stator winding have substantially the same shape.

3. The synchronous generator as claimed in claim 1 or 2, wherein the legs (12) of each form coil (10) are arranged in the stator (132) in an identical radial region (24) of the stator (132).

4. The synchronous generator as claimed in any of the preceding claims, wherein each segment (36) has six, or a multiple of six, form coils (10), each having a first terminal (16) and a second terminal (16), wherein six of the terminals (16) of the form coils (10) of a segment (36) are connected to six terminals (16) of the form coils (10) of a segment (36) arranged ahead of it in the circumferential direction and to six terminal (16) of the form coils (10) of a segment (36) situated after it in the circumferential direction.

5. The synchronous generator as claimed in any of the preceding claims, wherein the connection of two of the terminals (16) of different form coils (10) is established with U-shaped connecting elements, wherein the ends of the U shape are each connected to one terminal (16).

6. The synchronous generator as claimed in any of the preceding claims, wherein a leg (12) of a form coil (44) produced with or from copper is inserted into the adjacent slots (32), the spacing (42) of which is less than the spacing (33) of the slots (32) within a segment (36), and a leg (12) of a form coil (10) produced with or from aluminum is inserted into each of the majority of the remaining slots (32).

7. The synchronous generator as claimed in any of the preceding claims, wherein the connection of at least two of the terminals (16) of different form coils (10) is in each case produced by a connecting element which is composed of aluminum and, during the production of the copper coil, before the equipping of the stator, has been connected by cold pressure welding, friction stir welding, pressure brazing or pressure welding to that terminal of the copper form coil which is connected to a terminal of an aluminum form coil after the equipping of the stator.

8. The synchronous generator as claimed in any of the preceding claims, wherein at least one terminal (16) of a form coil (10) containing or composed of aluminum is connected to at least one terminal (16) of a form coil (44) containing or composed of copper, and the connection is preferably established by means of a connecting element which is produced from a copper-aluminum alloy or which is composed of two conductor materials, which are connected to one another to form a single part before the connection of the terminals.

9. The synchronous generator as claimed in any of the preceding claims, wherein the stator ring (30) of the stator (132) is joined together from a plurality of stator ring parts at at least two locations, in each case particularly in the connecting region (40) of two segments (36), in particular of two adjacent slots (32), which are each assigned to one of two different segments (36) and the spacing (42) of which is greater than the spacing (33) of the slots (32) within a segment (36).

10. The synchronous generator as claimed in any of the preceding claims, wherein the form coils (10) have one of the following shapes, in each case in the region of the winding overhang (14):
- outside the stator ring (30), the legs (12) are offset in opposite directions and extend in parallel as far as a 180 degree bend (26) which connects the legs (12), or
- outside the stator ring (30), the legs (12) are bent in the same direction with different spacings (20, 22) and then extend in parallel as far as a 180 degree bend (26) which connects the legs (12), wherein the bend (26) has an angle in a range of from 0 to 90 degrees in the same direction, or
- outside the stator ring (30), the legs (12) are bent in the same direction with different spacings (20, 22) and then extend in parallel as far as a 180 degree bend (26) which connects the legs (12), wherein the bend (26) has an angle of 90 degrees in the same direction.

11. A method for producing a synchronous generator (130) as claimed in any of the preceding claims, wherein the synchronous generator (130) has a stator ring (30) which is divided into a plurality of segments (36), wherein six, or a multiple of six, form coils (10), are inserted into each segment (36), wherein each form coil (10) has two terminals (16), and six of the terminals (16) of the form coils (10) of a segment (36) are connected to six terminals (16) of the form coils (10) of a segment (36) arranged ahead of it in the circumferential direction and to six terminals (16) of the form coils (10) of a segment (36) situated after it in the circumferential direction.

12. The method as claimed in claim 11, wherein the form coils (10) are in each case wound before being inserted into the slots (32) by winding one or more wires, in particular flat wires, arranged in parallel around a winding core, which is preferably formed from two mandrels, and the resulting coil is spread apart until the desired spacing (20, 22) of the two legs (12) corresponding to the spacing (33) of the slots (32) within a segment (36) is obtained and the winding overhangs (14) are bent by fixing sections of the coil (10) in fixtures and then moving these fixtures relative to one another until the desired shape of the form coil (10) is obtained by plastic deformation.

13. The method as claimed in claim 12, wherein, in the case of offset form coils (10), the coil in the region of the winding overhang (14) is offset first in the opposite direction before the legs (12) are spread apart.

14. The method as claimed in any of claims 11 to 13, wherein the terminals (16) of different form coils (10) are connected by means of U-shaped connecting parts by cold welding, pressure brazing or friction stir welding.

## Revendications

1. Générateur synchrone d'une éolienne à entraînement direct (100), comprenant un rotor (106) et un stator (132), dans lequel le stator (132) présente un anneau de stator (30) avec des dents (34) et des rainures (32) agencées entre pour la réception d'un enroulement de stator, et l'anneau de stator (30) est divisé dans la direction circonférentielle en segments (36) de stator avec respectivement un nombre identique de rainures (32) et les rainures (32) ont une distance (33) sensiblement identique l'une par rapport à l'autre dans la direction circonférentielle à l'intérieur d'un segment (36), dans lequel la distance (42) d'au moins deux rainures (32) adjacentes, qui sont associées respectivement à un de deux segments (36) différents, se distingue dans au moins une zone de liaison (38, 40) de deux segments de la distance (33) des rainures (32) à l'intérieur d'un segment (36),
**caractérisé en ce que**
l'enroulement de stator est formé avec des bobines (10) formées, dans lequel les bobines (10) formées sont fabriquées en différents matériaux, dans lequel dans des rainures (32) adjacentes, dont la distance (42) est inférieure à la distance (33) des rainures (32) à l'intérieur d'un segment (36) l'une par rapport à l'autre, une branche (12) d'une bobine (10) formée est utilisée avec une première résistance spécifique et dans la pluralité des rainures (32) restantes respectivement une branche (12) d'une bobine (10) formée est utilisée avec une résistance spécifique comparativement supérieure.

2. Générateur synchrone selon la revendication 1, dans lequel les bobines (10) formées présentent respectivement deux branches (12), les branches (12) sont reliées l'une à l'autre par deux têtes d'enroulement (14) et les bobines (10) formées présentent respectivement deux raccords (16) dans la zone (18) d'une des têtes d'enroulement (14), dans lequel, exceptés les raccords (16), les branches (12) et les têtes d'enroulement (14) de toutes les bobines (10) formées de l'enroulement de stator présentent sensiblement la même forme.

3. Générateur synchrone selon la revendication 1 ou 2, dans lequel les branches (12) de chaque bobine (10) formée sont agencées dans le stator (132) dans une zone radiale (24) identique du stator (132).

4. Générateur synchrone selon l'une quelconque des revendications précédentes, dans lequel chaque segment (36) présente respectivement six, ou un multiple de six, bobines (10) formées avec respectivement un premier raccord (16) et un deuxième raccord (16), dans lequel six des raccords (16) des bobines (10) formées d'un segment (36) sont reliés à six raccords (16) des bobines (10) formées d'un segment (36) situé devant dans la direction circonférentielle et six raccords (16) des bobines (10) formées d'un segment (36) situé derrière dans la direction circonférentielle.

5. Générateur synchrone selon l'une quelconque des revendications précédentes, dans lequel la liaison de deux des raccords (16) de différentes bobines (10) formées est établie avec des éléments de liaison en forme de U, dans lequel les extrémités de la forme en U sont reliées respectivement à un raccord (16).

6. Générateur synchrone selon l'une quelconque des revendications précédentes, dans lequel dans les rainures (32) adjacentes, dont la distance (42) est inférieure à la distance (33) des rainures (32) à l'intérieur d'un segment (36) l'une par rapport à l'autre, une branche (12) d'une bobine formée (44) fabriquée avec ou en cuivre et dans la pluralité des rainures (32) restantes respectivement une branche (12) d'une bobine (10) formée fabriquée avec ou en aluminium est utilisée.

7. Générateur synchrone selon l'une quelconque des revendications précédentes, dans lequel la liaison d'au moins deux des raccords (16) de différentes bobines (10) formées est établie respectivement par un élément de liaison, qui se compose d'aluminium et a été relié lors de la fabrication de la bobine de cuivre avant l'équipement du stator par soudage par pression à froid, soudage par friction-malaxage, brasage par pression ou soudage par pression au raccord de la bobine formée de cuivre, qui est relié après l'équipement du stator à un raccord d'une bobine formée d'aluminium.

8. Générateur synchrone selon l'une quelconque des revendications précédentes, dans lequel au moins un raccord (16) d'une bobine (10) formée avec ou en aluminium est relié à au moins un raccord (16) d'une bobine formée (44) avec ou en cuivre et la liaison est établie de préférence avec un élément de liaison, qui est fabriqué à partir d'un alliage cuivre-aluminium ou qui se compose de deux matériaux conducteurs, qui sont reliés l'un à l'autre en une pièce avant la liaison des raccords.

9. Générateur synchrone selon l'une quelconque des revendications précédentes, dans lequel l'anneau de stator (30) du stator (132) est relié au moins à deux endroits respectivement en particulier dans la zone de liaison (40) de deux segments (36), en particulier entre deux rainures (32) adjacentes, qui sont associées respectivement à un de deux segments (36) différents et dont la distance (42) est supérieure à la distance (33) des rainures (32) à l'intérieur d'un segment (36), en plusieurs parties d'anneau de stator l'un à l'autre.

10. Générateur synchrone selon l'une quelconque des revendications précédentes, dans lequel les bobines (10) formées présentent respectivement dans la zone de la tête d'enroulement (14) une des formes suivantes :
- à l'extérieur de l'anneau de stator (30), les branches (12) sont coudées dans des directions opposées et s'étendent parallèlement jusqu'à une flexion (26) de 180 degrés, qui relie les branches (12), ou
- à l'extérieur de l'anneau de stator (30), les branches (12) sont incurvées à différentes distances (20, 22) dans la même direction et s'étendent alors parallèlement jusqu'à une flexion (26) de 180 degrés, qui relie les branches (12), dans lequel la flexion (26) présente dans la même direction un angle dans la plage de 0 à 90 degrés ou
- à l'extérieur de l'anneau de stator (30), les branches (12) sont incurvées à différentes distances (20, 22) dans la même direction et s'étendent alors parallèlement jusqu'à une flexion (26) de 180 degrés, qui relie les branches (12), dans lequel la flexion (26) présente dans la même direction un angle de 90 degrés.

11. Procédé de fabrication d'un générateur synchrone (130) selon l'une quelconque des revendications précédentes, dans lequel le générateur synchrone (130) présente un anneau de stator (30), qui est divisé en plusieurs segments (36), dans lequel respectivement six, ou un multiple de six, bobines (10) formées sont insérées dans chaque segment (36), dans lequel chaque bobine (10) formée présente deux raccords (16) et six des raccords (16) des bobines (10) formées d'un segment (36) sont reliés à six raccords (16) des bobines (10) formées d'un segment (36) situé devant dans la direction circonférentielle et six raccords (16) des bobines (10) formées d'un segment (36) situé derrière dans la direction circonférentielle.

12. Procédé selon la revendication 11, dans lequel les bobines (10) formées sont enroulées respectivement avant l'insertion dans les rainures (32), par le fait qu'un ou plusieurs fils métalliques agencés parallèlement, en particulier des fils plats, sont enroulés autour d'un noyau d'enroulement, qui est formé de préférence de deux mandrins, et la bobine en résultant est écartée jusqu'à ce qu'il en résulte la distance (20, 22) souhaitée des deux branches (12) en fonction de la distance (33) des rainures (32) à l'intérieur d'un segment (36) et les têtes d'enroulement (14) sont incurvées, par le fait que des sections de la bobine (10) sont fixées dans des dispositifs et ces dispositifs sont déplacés l'un par rapport à l'autre jusqu'à ce qu'il en résulte la forme souhaitée de la bobine (10) formée par déformation plastique.

13. Procédé selon la revendication 12, dans lequel dans le cas de bobines (10) formées coudées, la bobine est coudée dans la zone de la tête d'enroulement (14) d'abord en direction opposée, avant que les branches (12) soient écartées.

14. Procédé selon l'une quelconque des revendications 11 à 13, dans lequel les raccords (16) de différentes bobines (10) formées sont reliés à des éléments de liaison en forme de U par soudage à froid, brasage par pression ou soudage par friction-malaxage.
